(19)

Europäisches
Patentamt

European
Patent Office

Office européen
des brevets

(11)  **EP 2 086 284 A1**

(12)  **DEMANDE DE BREVET EUROPEEN**

(43) Date de publication:
  **05.08.2009  Bulletin 2009/32**

(51) Int Cl.:
  ***H05B 3/60*** *(2006.01)*  ***G01F 23/28*** *(2006.01)*

(21) Numéro de dépôt: **09151169.1**

(22) Date de dépôt: **23.01.2009**

(84) Etats contractants désignés:
  **AT BE BG CH CY CZ DE DK EE ES FI FR GB GR
  HR HU IE IS IT LI LT LU LV MC MK MT NL NO PL
  PT RO SE SI SK TR**
  Etats d'extension désignés:
  **AL BA RS**

(30) Priorité: **25.01.2008  FR 0850488**

(71) Demandeur: **Electricité de France
  75008 Paris (FR)**

(72) Inventeurs:
  • **Zaid, Ismael
    77810, THOMERY (FR)**
  • **Flach-Malaspina, Nicolas
    75012, PARIS (FR)**
  • **Ghnimi, Sami
    60200, COMPIEGNE (FR)**

(74) Mandataire: **Cabinet Plasseraud
  52, rue de la Victoire
  75440 Paris Cedex 09 (FR)**

(54)  **Cellule de chauffage ohmique avec élément radar**

(57)    Dispositif (1) de chauffage d'un fluide (10), comportant :
- au moins une première et une deuxième électrode (21,22) raccordables à une source de tension ;
- des moyens (21) de jet adaptés pour générer, à partir d'un fluide reçu, un jet (13) du fluide passant par la première électrode et se dirigeant vers la deuxième électrode ;
- un élément émetteur/récepteur d'ondes (33) adapté pour émettre un faisceau d'ondes autour d'un axe (XX) sensiblement parallèle au jet et à destination du fluide présent dans le dispositif et issu du jet, l'élément émetteur/récepteur d'ondes étant en outre adapté pour détecter des échos des ondes émises en vue de déterminer la longueur (L) du jet en fonction des échos détectés.

FIG.2.

## Description

La présente invention concerne les dispositifs de chauffage de fluides.

Afin de respecter certaines normes d'hygiène et de qualité, de nombreux produits agroalimentaires doivent subir un traitement physique et/ou chimique. Ainsi, la stérilisation ou pasteurisation de certains produits fluides, par exemple le lait ou les crèmes desserts, les ovoproduits, la gélatinisation de l'amidon, le traitement du sang, etc. sont généralement obtenus par chauffage.

Il est courant d'effectuer cette opération de chauffage au moyen d'un dispositif comportant un échangeur thermique qui a une surface de contact avec le fluide à chauffer. Cependant, ce type de dispositif présente l'inconvénient d'un fort encrassement au niveau de la surface de contact, par exemple dans le cas de traitement de produits visqueux et encrassant.

Cela pose un problème sanitaire, mais également de rendement énergétique, puisque le fluide est en contact direct avec la surface de l'échangeur, ce qui provoque : une surchauffe pariétale du fluide, une dispersion des temps de séjour dans la conduite, un encrassement des parois d'échange, une cinétique de montée en température lente et un régime d'écoulement laminaire créant des phénomènes de convection mixte. Il est donc impératif d'interrompre le fonctionnement du dispositif de manière régulière afin de le nettoyer. Ces interruptions nécessaires diminuent de manière conséquente la productivité de l'installation.

De plus, une inhomogénéité du traitement est caractéristique de ce type de chauffage puisque la température du fluide en tous points du dispositif n'est pas maîtrisée et dépend également du taux d'encrassement de la surface de l'échangeur. En outre, pour obtenir un chauffage plus homogène, il faut induire dans le fluide des mouvements de convection d'où une perte d'énergie.

Les dispositifs de chauffage ohmique à jet de fluide comprennent au moins deux électrodes raccordables à une source de tension et des moyens pour générer un écoulement continu du fluide le long d'un trajet passant entre les deux électrodes. Un courant alternatif traverse le fluide s'écoulant sous forme d'un jet entre les deux électrodes, grâce à la gravité. L'énergie est dissipée dans le fluide par effet Joule. Le fluide se comporte comme une résistance électrique et le chauffage du fluide est volumique et rapide. L'encrassement est nettement réduit du fait de l'absence de paroi en contact avec le fluide chauffé. Un tel dispositif de chauffage de fluide permet d'augmenter le rendement du chauffage en diminuant nettement la fréquence de nettoyage et la consommation d'énergie et est particulièrement avantageux pour chauffer des fluides visqueux et encrassants.

La tension appliquée aux bornes des électrodes a par exemple une amplitude comprise entre 500 et 4000 volts et une fréquence de l'ordre de 20-30 KHz.

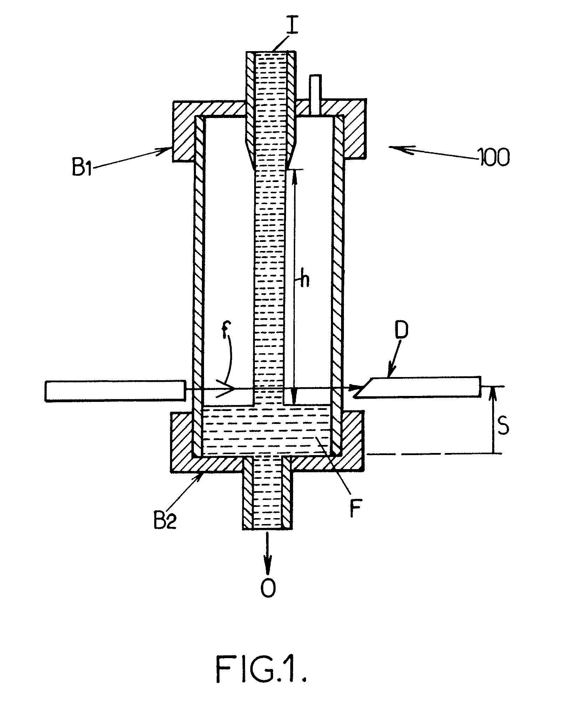

Par exemple, sur la figure 1 est représenté, en coupe longitudinale, un dispositif 100 de chauffage ohmique à jet de fluide. Ce dispositif 100 comprend une cellule par exemple en verre avec une entrée I de fluide à chauffer, une sortie O de fluide chauffé, une électrode B1 à la phase et une électrode B2 à la masse. Le fluide F est introduit dans la cellule via l'entrée I en amont de l'électrode B1, il s'écoule au sein de la cellule sous forme d'un jet depuis l'électrode B1 vers l'électrode B2. Le fluide F ainsi chauffé sort de la cellule de chauffage 100 depuis la sortie O.

La cellule de chauffage 100 comporte en outre un détecteur D de niveau à fibre optique, permettant de surveiller que le niveau du fluide F dans la partie inférieure de la cellule ne dépasse pas un certain seuil S, en vue de la régulation de ce niveau. Il est important de connaître le niveau du fluide F dans la partie inférieure de la cellule car la puissance de chauffage dépend de la longueur de jet. La fibre optique s'étend parallèlement à la surface du fluide, la lumière étant transmise dans le sens indiqué par la flèche f. Lorsque le niveau du fluide dans la partie inférieure dépasse le seuil S, l'intensité lumineuse de la lumière reçue après la traversée du fluide par la lumière devient sensiblement inférieure à l'intensité lumineuse reçue précédemment, lorsque le niveau du fluide était inférieur au seuil S. La détection de cette variation permet de détecter que le seuil S a été atteint par le niveau de fluide, et par la suite de mettre en oeuvre les actions pour faire diminuer le niveau du fluide.

Le document FR 05 06224 décrit également un dispositif de chauffage ohmique à jet de fluide, avec un système de détection de niveau similaire à celui décrit plus haut, si ce n'est qu'il repose sur une technologie de type laser ou ultrasons à la place de la fibre optique.

Un système de détection tel que proposé dans la cellule de chauffage de la figure 1 ou dans le document FR 05 06224 présente des inconvénients. En effet, les mesures effectuées par le système de détection sont perturbées par les dépôts de fluide visqueux sur les parois de la cellule ou la présence de mousse à la surface du fluide, ce qui entraîne des difficultés pour réguler le niveau.

Il est possible également de déterminer le niveau du fluide F dans la partie inférieure du dispositif en en déterminant le poids à l'aide de capteurs à flexion. Toutefois cette technique n'est pas adaptée aux conditions extrêmes de fonctionnement de ces dispositifs de chauffage ohmique dans un milieu industriel, notamment aux phénomènes de vibrations.

Or dans les cellules de chauffage à jet de fluide, il est important de connaître le niveau du fluide dans la partie inférieure de la cellule (ou la longueur du jet de fluide) afin de le réguler, car la puissance de chauffage dépend de cette longueur de jet. Il est souhaitable de maintenir la longueur du jet constante lors du traitement thermique d'un produit donné.

La présente invention a pour but de proposer une cellule de chauffage à jet de fluide disposant d'un système de détection de longueur de jet qui fournisse des mesures fiables et précises même lorsque le fluide donne lieu à de la mousse à la surface ou à des dépôts sur la paroi extérieure. La robustesse et la simplicité de régulation du jet du fluide facilite sa mise en place dans l'industrie.

A cet effet, suivant un premier aspect, l'invention propose un dispositif de chauffage d'un fluide, comportant :

- au moins une première et une deuxième électrode raccordables à une source de tension ;

- des moyens de jet adaptés pour générer, à partir d'un fluide reçu, un jet dudit fluide passant par la première électrode et se dirigeant vers la deuxième électrode ;

- un élément émetteur/récepteur d'ondes adapté pour émettre un faisceau d'ondes autour d'un axe sensiblement parallèle au jet et à destination du fluide présent dans le dispositif et issu du jet, l'élément émetteur/récepteur d'ondes étant en outre adapté pour détecter des échos des ondes émises en vue de déterminer une valeur indiquant une longueur du jet en fonction desdits échos détectés.

Un tel dispositif de chauffage permet de mesurer avec précision la longueur du jet de fluide, même dans le cas de fluides produisant beaucoup de mousse ou donnant lieu à des dépôts sur les parois du dispositif de chauffage.

Les dépôts encrassant les parois du dispositif de chauffage peuvent être dus à des vibrations mécaniques du dispositif. On comprendra que ces mesures de niveau de fluide dans un environnement aussi hostile n'ont donné leurs meilleurs résultats que lorsque ces mesures sont réalisées par émission/réception d'ondes incidentes/réfléchies, comme au sens de l'invention, par rapport aux autres techniques décrites ci-avant en introduction.

Cette technique de mesure de niveau de fluide par réflexion d'onde est certes connue, notamment par le document WO-01/42746. Toutefois, elle est décrite dans ce document pour la mesure d'un niveau de fluide dans un réservoir de stockage, tel qu'une citerne ou autre réservoir de grandes dimensions qui n'est aucunement destiné à subir des vibrations mécaniques ou former une mousse en surface. On comprendra alors que ce document WO-01/42746 ne décrit ou ne suggère en rien une application dans un environnement à vibrations, signifiant une lecture délicate du niveau de fluide.

De façon non attendue, la mesure du niveau de fluide par réflexion d'onde sous forme d'écho a donné les meilleurs résultats dans ce contexte d'un dispositif de chauffage ohmique. Le choix de cette technique de mesure au sens de l'invention n'est pas anodin dans un tel contexte. Il est rappelé en effet qu'une bonne précision de la mesure du niveau de fluide permet avantageusement de chauffer le fluide rapidement à une température donnée pour un fonctionnement optimal du dispositif de chauffage ohmique.

Dans des modes de réalisation, le dispositif de chauffage selon l'invention comporte une ou plusieurs des caractéristiques suivantes :

■ le dispositif de chauffage comporte des moyens de régulation adaptés pour réguler, en fonction de la valeur déterminée indiquant la longueur de jet, le niveau du fluide présent dans le dispositif et issu du jet ; cette disposition permet notamment de garder constante la longueur du jet ;

■ le dispositif de chauffage comporte une entrée de fluide à chauffer avec un débit d'entrée et une sortie de fluide chauffé avec un débit de sortie, et les moyens de régulation sont adaptés pour piloter le débit d'entrée et/ou le débit de sortie en fonction d'au moins la valeur déterminée indiquant la longueur du jet ;

■ les moyens de régulation régulent ledit niveau en modifiant une pression appliquée au moins sur le fluide issu du jet et présent dans le dispositif ;

■ le jet de fluide généré par les moyens de chauffage est de section sensiblement constante ;

■ l'élément émetteur/récepteur d'ondes est un élément radar ;

■ le dispositif comprend en outre un guide d'ondes, percé de trous, disposé entre l'élément émetteur/récepteur et la surface du fluide issu du jet et adapté pour guider le faisceau d'ondes émis par l'élément émetteur/récepteur ;

■ le dispositif comprend en outre une pièce d'isolation électrique sur laquelle est disposé l'élément émetteur/récepteur.

D'autres particularités et avantages de la présente invention apparaîtront dans la description ci-après d'exemples de réalisation non limitatifs, en référence aux dessins annexés, dans lesquels :

- la figure 2 est un schéma représentant un premier mode de réalisation, conforme à l'invention ;

- la figure 3 est un schéma représentant un deuxième mode de réalisation, conforme à l'invention.

Sur ces différentes figures, on a conservé les mêmes références pour les éléments identiques ou équivalents.

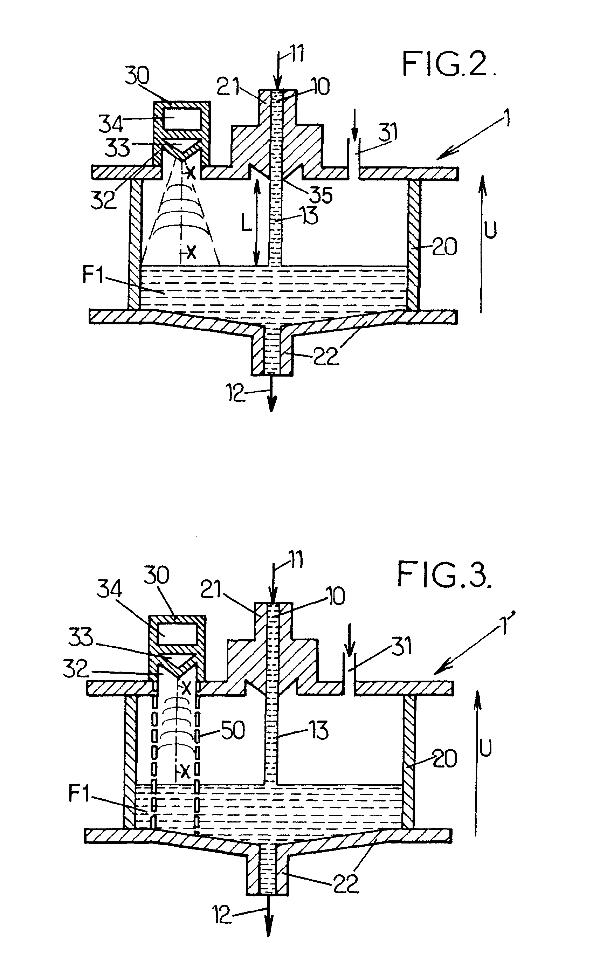

La figure 2 représente un dispositif de chauffage 1 selon un premier mode de réalisation. Il comprend une paroi extérieure 20 par exemple en verre ou autre, une électrode de phase 21, une électrode de masse 22 et un module de traitement 30.

Une différence de potentiel U est appliquée entre les électrodes de phase 21 et de masse 22. Cette différence de potentiel a par exemple une amplitude prenant une valeur entre 500 volts et 5000 volts. Cette différence de potentiel a par exemple une fréquence de 25 kHz par exemple.

Le fluide 10 à chauffer pénètre dans le dispositif par l'entrée 11. Puis, il s'écoule par gravité, sous forme de jet 13 depuis une partie 35 de l'électrode de phase 21 en forme de buse, vers l'électrode de masse 22.

En raison de la différence de potentiel entre l'électrode de phase 21 et l'électrode de masse 22, un courant électrique circule dans le jet 13, qui joue le rôle de résistance électrique et qui donc s'échauffe par effet Joule.

Le fluide F1 issu du jet 13 et contenu dans la partie inférieure du dispositif 1 de forme conique délimitée par l'électrode de masse 22, sort du dispositif 1 par une sortie 12 disposée au fond du dispositif 1.

Le dispositif de chauffage 1 comprend, dans le mode de réalisation considéré, un dispositif d'injection de gaz 31, par exemple d'un gaz neutre comme de l'azote, afin de permettre de maintenir une pression suffisante à l'intérieur du dispositif pour éviter la vaporisation du fluide à chauffer, de maintenir dans le cas de fluides non visqueux une section de jet constante, et d'augmenter/diminuer la pression à l'intérieur du dispositif de manière à réguler la longueur du jet 13 souhaité.

Le module de traitement 30 est fixé sur une pièce 32 en matériau isolant (par exemple en PEEK) disposée sur l'électrode 21 à la phase, afin d'isoler électriquement le module de traitement 30 de l'électrode 21.

Le module de traitement 30 comporte un élément radar 33 et un bloc de traitement 34.

L'élément radar 33 est adapté pour émettre régulièrement un faisceau d'ondes radar centré sur un axe (X,X) disposé parallèlement au jet 13, et donc perpendiculairement à la surface du fluide F1 issu du jet 13. L'élément radar 33 est en outre adapté pour détecter des ondes issues de la réflexion du faisceau d'ondes radar émis. L'élément radar 33 est adapté pour calculer, en fonction des caractéristiques des ondes émises et des ondes réfléchies détectées, la longueur L du jet 13, qui est la longueur entre la surface du fluide F1 et la buse 35 de l'électrode 21. L'élément radar 33 est disposé face à la surface du fluide F1 issu du jet 13 et reposant dans la partie inférieure du dispositif.

Dans le mode de réalisation représenté en figure 2, le faisceau d'ondes est de forme conique centré autour de l'axe (X,X). Des ondes émises sont réfléchies par la surface du fluide F1.

La longueur L ainsi déterminée est ensuite délivrée au bloc de traitement 34 qui compare cette longueur L à une longueur déterminée L0. Si la valeur absolue de la différence L-L0 excède un seuil fixé, le bloc de traitement 34 est adapté pour transmettre une commande au dispositif d'injection de gaz 31 de manière à, si L > L0, faire augmenter la pression interne du dispositif et ainsi augmenter le débit de sortie du fluide pour faire tendre L vers L0 et si L < L0, faire diminuer la pression interne du dispositif et ainsi diminuer le débit de sortie du fluide pour faire tendre L vers L0. Dans un autre mode de réalisation, le dispositif 1 comporte en plus ou à la place du dispositif d'injection de gaz 31, un robinet ou une valve, placé en aval du dispositif de chauffage.

Ainsi la longueur du jet 13 est gardé sensiblement constante, égale à L0.

La résistance du segment de jet de fluide 13 à chauffer est ainsi sensiblement constante puisque sa section et sa longueur sont sensiblement constantes. La résistance du fluide R est égale :

$$R = K \cdot [L0/d^2],$$

où K est proportionnelle à la résistivité du fluide 10 et d le diamètre du jet de fluide 10. Ainsi une tension U donnée appliquée aux bornes des électrodes permet d'obtenir une élévation de température du fluide donnée, le débit d'entrée étant également fixé.

A titre d'illustration, dans un mode de réalisation, le diamètre interne de la paroi extérieure 20 est de 320 mm, la distance entre les deux électrodes 21 et 22 est de 175 mm, les diamètres des conduites hydrauliques en entrée et sortie du dispositif de chauffage sont de 13 mm.

Dans un autre mode de réalisation représenté en figure 3, un dispositif de chauffage 1' comprend en outre un guide d'onde 50 disposé parallèlement au jet 13, entre l'élément 33 et la surface inférieure du dispositif. Les parois du guide d'onde 50 sont percées de trous de manière à ce que le niveau du fluide F1 soit le même à l'intérieur qu'à l'extérieur du guide d'onde. Dans un tel cas, le faisceau d'ondes frappant la surface du fluide F1 déposé dans la partie inférieure du dispositif 1 a la forme d'un cylindre centré autour de l'axe (X,X).

Ce mode de réalisation est avantageux lorsque la constante diélectrique du fluide est faible, pour concentrer le rayonnement de l'onde et récupérer un écho satisfaisant sans échos parasites.

Ce mode de réalisation est aussi particulièrement avantageux dans le cas d'un fluide moussant beaucoup, par exemple un fluide à base de levure ou d'amidon, le guide d'onde canalisant les ondes sur une surface présentant moins de mousse qu'en-dehors du guide d'ondes.

Ce mode de réalisation est aussi particulièrement avantageux lorsque le fluide à la surface est agité.

L'élément radar permet de mesurer la longueur d'un jet de fluide en circulation traversé par un courant électrique important et donnant lieu à la production de mousse ou de dépôt, avec précision et sans nécessiter de nettoyages fréquents. Un dispositif de chauffage selon l'invention permet donc de chauffer un fluide visqueux et encrassant avec précision et rapidité à une température donnée (par exemple 140 °C). Le fluide n'est pas en contact avec une paroi chauffante.

Les opérations menées par l'élément radar ne sont pas sensibles aux variations de pression et de températures, de vibrations extérieures des machines, de nature visqueuse, moussante, agitée ou encrassante des fluides chauffés, de profil d'écoulement du jet, ou du courant électrique traversant le jet.

Un tel dispositif de chauffage avec élément radar est très robuste et ainsi aisément exploitable dans un milieu industriel.

Les mesures de longueur effectuées sont fiables quelles que soient les caractéristiques de viscosité du fluide, même en cas de changement d'état du fluide, ainsi qu'en présence de vibrations d'origine diverse.

Les mesures peuvent être effectuées en utilisant des parois de cellule de chauffage fabriquées dans des matériaux non transparents (ce qui est compatible avec des contraintes de sécurité visant à limiter l'utilisation du verre dans l'industrie agroalimentaire.

## Revendications

**1.** Dispositif (1) de chauffage d'un fluide (10), comportant :

- au moins une première et une deuxième électrodes (21,22) raccordables à une source de tension ;
- des moyens (21) de jet adaptés pour générer, à partir d'un fluide reçu, un jet (13) dudit fluide passant par la première électrode et se dirigeant vers la deuxième électrode ;
- un élément émetteur/récepteur d'ondes (33) adapté pour émettre un faisceau d'ondes autour d'un axe (XX) sensiblement parallèle au jet et à destination du fluide présent dans le dispositif et issu du jet, l'élément émetteur/récepteur d'ondes étant en outre adapté pour détecter des échos des ondes émises en vue de déterminer une valeur indiquant une longueur (L) du jet en fonction desdits échos détectés.

**2.** Dispositif (1) selon la revendication 1, comprenant en outre des moyens de régulation (31,34) adaptés pour réguler, en fonction de la valeur déterminée indiquant la longueur (L) de jet, le niveau du fluide présent dans le dispositif et issu du jet.

**3.** Dispositif (1) selon la revendication précédente, comprenant une entrée (11) de fluide à chauffer avec un débit d'entrée et une sortie (12) de fluide chauffé avec un débit de sortie, dans lequel les moyens de régulation (31,34) sont adaptés pour piloter le débit de sortie en fonction d'au moins la valeur déterminée indiquant la longueur (L) du jet.

**4.** Dispositif selon la revendication 2 ou 3, dans lequel les moyens de régulation (31,34) régulent ledit niveau en modifiant une pression appliquée au moins sur le fluide issu du jet et présent dans le dispositif.

**5.** Dispositif selon l'une des revendications précédentes, dans lequel le jet (13) de fluide est de section sensiblement constante.

**6.** Dispositif selon l'une des revendications précédentes, dans lequel l'élément émetteur/récepteur d'ondes (33) est un élément radar.

**7.** Dispositif (1') selon l'une des revendications précédentes, comprenant en outre un guide d'ondes (50), percé de trous, disposé entre l'élément émetteur/récepteur (33) et la surface du fluide issu du jet (13) et adapté pour guider le faisceau d'ondes émis par l'élément émetteur/récepteur.

**8.** Dispositif (1) selon l'une des revendications précédentes, comprenant en outre une pièce d'isolation électrique (32) sur laquelle est disposé l'élément émetteur/récepteur (33).

FIG.1.

FIG.2.

FIG.3.

Europäisches
Patentamt

European
Patent Office

Office européen
des brevets

**RAPPORT DE RECHERCHE EUROPEENNE**

Numéro de la demande

EP 09 15 1169

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 1 737 272 A (ELECTRICITÉ DE FRANCE) 27 décembre 2006 (2006-12-27) * alinéas [0001], [0016]; figure 1 * ----- | 1-8 | INV. H05B3/60 G01F23/28 |
| Y | WO 01/42746 A (SAAB MARINE ELECTRONICS) 14 juin 2001 (2001-06-14) * page 5, ligne 17 - ligne 20 * ----- | 1-8 | |

**DOMAINES TECHNIQUES RECHERCHES (IPC)**

H05B
G01F

Le présent rapport a été établi pour toutes les revendications

| Lieu de la recherche | Date d'achèvement de la recherche | Examinateur |
|---|---|---|
| La Haye | 12 mai 2009 | Taccoen, J |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

...........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 15 1169

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-05-2009

| Document brevet cité au rapport de recherche | | Date de publication | Membre(s) de la famille de brevet(s) | | Date de publication |
|---|---|---|---|---|---|
| EP 1737272 | A | 27-12-2006 | FR | 2887392 A1 | 22-12-2006 |
| WO 0142746 | A | 14-06-2001 | AU | 2032201 A | 18-06-2001 |
| | | | SE | 9904521 A | 11-06-2001 |

EPO FORM P0460

**EP 2 086 284 A1**

**RÉFÉRENCES CITÉES DANS LA DESCRIPTION**

**Documents brevets cités dans la description**

- FR 0506224

- WO 0142746 A